**Europäisches Patentamt**

**European Patent Office**

**Office européen des brevets**

(19)

(11) Veröffentlichungsnummer : **0 413 131 B1**

(12) **EUROPÄISCHE PATENTSCHRIFT**

(45) Veröffentlichungstag der Patentschrift :
**02.12.92 Patentblatt 92/49**

(21) Anmeldenummer : **90113211.8**

(22) Anmeldetag : **11.07.90**

(51) Int. Cl.⁵ : **B65G 67/60**

---

(54) **Regendach für Senkrechtförderer.**

(30) Priorität : **12.08.89 DE 3926701**

(43) Veröffentlichungstag der Anmeldung :
**20.02.91 Patentblatt 91/08**

(45) Bekanntmachung des Hinweises auf die
Patenterteilung :
**02.12.92 Patentblatt 92/49**

(84) Benannte Vertragsstaaten :
**BE DE FR GB NL**

(56) Entgegenhaltungen :
**DE-A- 3 323 168**

(73) Patentinhaber : **O&K Orenstein & Koppel
Aktiengesellschaft
Brunsbütteler Damm 144-208
W-1000 Berlin 20 (DE)**

(72) Erfinder : **Maack, Michael
Wilhelm-Heinrich-Strasse 2
W-6600 Saarbrücken (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 413 131 B1

## Beschreibung

Die Erfindung betrifft ein Regendach für Senkrechtförderer, insbesondere zur Abdeckung von Schiffsluken, bestehend aus geneigt und zentrisch zum Senkrechtförderer angeordneten sowie damit verbundenen schirmähnlich ausgestalteten seitlichen Dachabschnitten, die durch mindestens eine Hubeinrichtung in eine aufgefaltete bzw. geschlossene Position bringbar sind.

Beim Be- und Entladen, insbesondere von Schiffen, ist das oft empfindliche Ladegut durch die geöffneten Ladeluken dem Wetter ausgesetzt, so daß eventuell der Betrieb unterbrochen werden muß. In manchen Fällen behelfen sich die Stauer mit einer Segeltuchabdeckung, die am Be- oder Entladegerät befestigt wird und über den Lukenrand hinausragt. Der Vorteil dieser Lösung ist in der preiswerten Ausführung zu sehen, während die Nachteile im wesentlichen darin begründet sind, daß die Relativbewegung zwischen dem Be- oder Entladegerät und dem Schiff behindert wird. Ferner nachteilig ist eine Verdunkelung des Laderaumes sowie das Eindringen von großen Wassermengen, wenn Teile der Segeltuchabdeckung innerhalb des Lukenrandes enden, was nicht immer auszuschließen ist.

Durch die DE-A 30 09 139 ist eine in sich bewegliche Überdachungsvorrichtung für Schiffsluken, Lagerräume, Bunker oder dgl. vorbekannt, die einen äußeren rechteckig ausgestalteten Rahmen sowie einen mit diesem verbindbaren mittleren Rahmen aufweist. Der äußere Rahmen ist beidseitig in Längsrichtung mit Außenführungsbahnen ausgebildet, in denen in beiden äußeren Bereichen längsvariable Dachabschnitte beweglich gelagert sind. Der mittlere Rahmen weist eine in der horizontalen Ebene allseitig bewegbare, zur Aufnahme eines Rüssels oder dgl. eines Senkrechtförderers vorgesehene konzentrische Öffnung auf, um die herum die längs- und quervariablen Dachabschnitte in jeder Position den gesamten Überdachungsbereich abdecken. Nachteile einer solchen Vorrichtung sind im wesentlichen darin begründet, daß sie in eingefaltetem Zustand, trotz harmonikaförmig ausgebildeter Bauweise, radial relativ weit über das Rohr des Senkrechtförderers hinausragen. Ferner erscheint die Montage am Lukenrand verhältnismäßig aufwendig zu sein, wobei jeder Dachabschnitt von seiner Dimension her so ausgelegt werden muß, daß das Rohr des Senkrechtförderers bis maximal an die gegenüberliegende Wand der Luke herangeführt werden kann.

Der DE-C 31 22 902 ist ein Regendach für Senkrechtförderer, Wendelrutschen oder dgl., insbesondere für Schiffsluken, zu entnehmen, das aus mehreren geneigt und zentrisch zum Senkrechtförderer angeordneten seitlichen Dachabschnitten gebildet ist, die mittels Tragseilen in ihrer Position haltbar bzw. heb- und senkbar sind. Die seitlichen Dachabschnitte sind schirmförmig ausgestaltet und an ihrem oberen Ende mit Abstand zum Senkrechtförderer einserseits an mindestens drei Tragseilen befestigt, die zur Auf- und Abwärtsbewegung mit drehbar am Senkrechtförderer gelagerten Seiltrommeln kraftschlüssig verbunden sind und andererseits zur Führung mit einem Gestell verbunden sind, das an einem zylinderförmigen äußeren Mantel des Senkrechtförderers mittels einer vertikal gleitbaren Buchse sowie Führungsrollen geführt und mit einem zentrisch und konisch ausgebildeten inneren Dach versehen ist. Mit dieser Maßnahme kann zwar gezielt eine vollständige Lukenabdeckung realisiert werden, die jedoch bei der seitlichen Bewegung des Be- oder Entladegerätes entweder zu Problemen durch Beschädigungen bei der Berührung des bzw. der Dachabschnitte mit dem Lunkenrand oder aber in einen erheblichen steuerungstechnischen Aufwand ausartet, um durch Heben und Senken der Dachabschnitte in vertikaler Richtung dem seitlichen Verfahren des Be- oder Entladegerätes innerhalb der Laderaumluke folgen zu können. Darüberhinaus erscheint der bauliche Aufwand verhältnismäßig groß zu sein, um das Auffalten bzw. Zusammenziehen der schirmähnlich ausgebildeten Dachabschnitte bewerkstelligen zu können.

Der Erfindung liegt die Aufgabe zugrunde, das in der DE-C 31 22 902 beschriebene Regendach für Senkrechtförderer dahingehend weiterzubilden, daß einerseits der bauliche Aufwand vereinfacht und die Handhabungsweise beim Auffalten bzw. Einziehen des Regendaches auf ein Minimum reduziert wird. Darüberhinaus sollen bei höchstmöglichem Abdichtungsgrad Beschädigungen bei Berührung der seitlichen Dachabschnitte mit den Lukenrändern vermieden werden.

Diese Aufgabe wird Erfindungsgemäß dadurch gelöst, daß die Dachabschnitte dergestalt am Senkrechförderer verlagert sind, daß ihre unteren Begrenzungskanten im geöffneten sowie geschlossenen Zustand mit dem Rohr des Senkrechtförderers abschließen, während ihre oberen Begrenzungskanten den jeweiligen Lukenrand nach außen überragen und daß das sich an der tiefsten Stelle des Regendaches ansammelnde Wasser nach unten bzw. nach außen abführbar ist.

Vorteilhafte Weiterbildungen des Erfindungsgegenstandes sind den Unteransprüchen zu entnehmen.

Durch die Art der Entfaltung (umgekehrter Regenschirm) können bei Relativbewegungen zwischen Gerät und Schiff keine Stauchungen der die Dachabschnitte haltenden Streben auftreten, da diese nur durch ihr Eigengewicht die jeweiligen Dachabschnitte aufklappen. Nebenbei läßt die Form der Abdeckung mehr Licht in den Laderaum fallen. Da hier die Dachabschnitte im wesentlichen nur durch die Zugseile gehoben bzw. gesenkt werden, besteht die Möglichkeit, unterschiedlich große Ladeluken abdecken zu können, da infolge der elastischen Verbindungen (Faltenbalg) im Bereich der Berührungspunkte der Dachabschnitte diese bis nahezu in die horizontale Position abgesenkt werden können. Das sich im mittleren Bereich des Regendaches ansammelnde Wasser kann entweder nach außen außerbords oder aber nach innen in die Bilge des Schiffes abgeführt werden. Probleme, wie sie beim St.d.T. gegeben sind, (Wasseransammlung auf den Schiffsdecks usw.) sind hiermit nicht mehr gegeben. Durch gezielte Steuerung des Regendaches (Berührungsschalter) kann bei Berührung eines Dachabschnittes mit dem Lukenrand der diesem gegenüberliegende Dachabschnitt um den gleichen Betrag abgesenkt werden wie der erste Dachabschnitt angehoben wird. Durch Verwendung eines Schlagregenschutzes im Bereich der oberen Begrenzungskante der einzelnen Dachabschnitte kann in jedem Fall sichergestellt werden, daß kein Wasser in den Laderaum eindringen kann.

Die Erfindung ist anhand einer Prinzipskizze in der Zeichnung dargestellt und wird wie folgt beschrieben. Es zeigen:

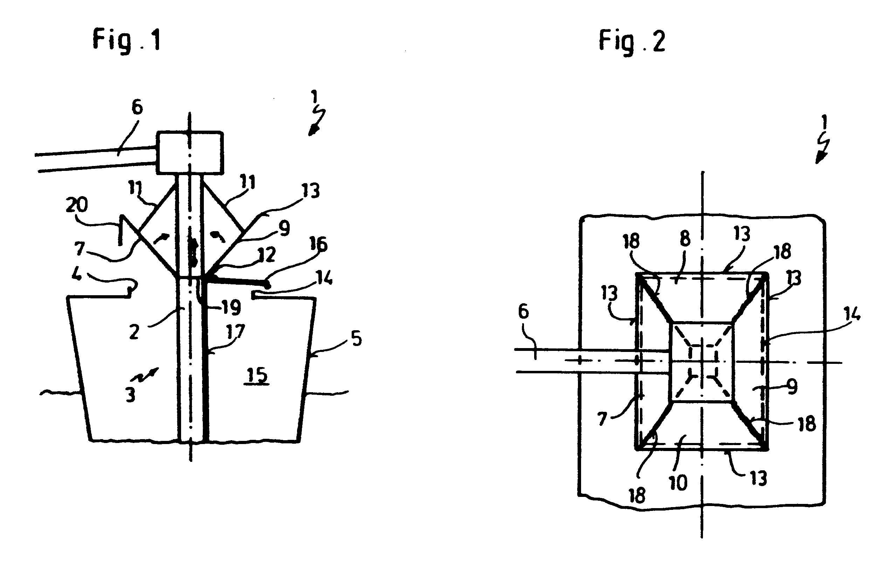

Fig. 1 und 2 - unterschiedliche Ansichten des erfindungsgemäßen Regendaches.

In den Figuren 1 und 2 ist das erfindungsgemäße Regendach 1 einerseits in der Seitenansicht und andererseits in der Draufsicht dargestellt. Das Regendach 1 ist in diesem Fall mit dem Beladerohr 2 eines Senkrechtförderers 3 verbunden, welcher durch eine Ladeluke 4 eines Schiffes 5 in vertikaler Richtung nach unten hineinragt. Das schüttförmige Gut wird über eine Zuführeinrichtung 6 dem Beladerohr 2 zugeführt. Das Regendach 1 ist aus mehreren Dachabschnitten 7,8,9,10 gebildet, die mittels Hubseilen 11 sowie einer nicht weiter dargestellten Hubwinde in ihrer Neigung veränderbar sind. Die unteren Begrenzungskanten 12 des Regendaches sind im geöffneten sowie im geschlossenen Zustand mit dem Beladerohr 2 verbunden, während die oberen Begrenzungskanten 13 über den Lukenrand 14 der Luke 4 hinwegragen.

Infolge dieser umgekehrten Regenschirmanordnung kann einerseits Tageslicht von oben durch die Luke in den Laderaum 15 des Schiffes 5 eindringen und andererseits das sich im Innern des Regendaches 1 ansammelnde Wasser entweder mittels einer ggf. teleskopierbaren Rohrleitung 16 nach außen oder alternativ mittels einer Rohrleitung 17 in die Bilge des Schiffes 5 abgeführt werden.

Die Verbindungsbereiche 18 der einzelnen Dachabschnitte 7-10 sind elastisch, insbesondere nach Art eines Faltenbalges, ausgebildet. Die einzelnen Dachabschnitte 7-10 können bei Berührung mit dem Lukenrand 14 ausweichen. Außerdem wird die Möglichkeit gebildet, in Form eines Automatismus bei Ausweichen beispielsweise des Dachabschnittes 9 ein Nachführen des Dachabschnittes 7 im öffnenden Sinne herbeizuführen. Mittels einer nur angedeuteten Führungseinrichtung 19 besteht die Möglichkeit, das Regendach 1 in vertikaler Richtung relativ zum Beladerohr 2 des Senkrechtförderers 3 zu verschieben, um so unterschiedlichen Beladezuständen des Schiffes 5 gerecht werden zu können. Für extreme Wetterverhältnisse besteht die Möglichkeit, im Bereich der oberen Begrenzungskante 13 einen zusätzlichen Schlagregenschutz 20 vorzusehen.

**Patentansprüche**

1. Regendach für Senkrechtförderer, insbesondere zur Abdeckung von Schiffsluken, bestehend aus geneigt und zentrisch zum Senkrechtförderer (3) angeordneten sowie damit verbundenen schirmähnlich ausgestalteten seitlichen Dachabschnitten (7,10), die durch mindestens eine Hubeinrichtung in eine aufgefaltete bzw. geschlossene Position bringbar sind, dadurch gekennzeichnet, daß die Dachabschnitte (7-10) dergestalt am Senkrechtförderer (3) verlagert sind, daß ihre unteren Begrenzungskanten (12) im geöffneten sowie geschlossenen Zustand mit dem Rohr (2) des Senkrechtförderers (3) abschließen, während ihre oberen Begrenzungskanten (13) den jeweiligen Lukenrand (14) nach außen überragen, und daß das sich an der tiefsten Stelle des Regendaches (1) ansammelnde Wasser nach unten bzw. nach außen abführbar ist.

2. Regendach nach Anspruch 1, dadurch gekennzeichnet, daß das sich ansammelnde Wasser nach außen mittels eines ggf. teleskopierbaren Abflußrohres (16) abführbar ist.

3. Regendach nach Anspruch 1, dadurch gekennzeichnet, daß das sich ansammelnde Wasser nach unten in die Bilge des Schiffes (5) durch ein mit dem Senkrechtförderer (3) verbundenes Abflußrohr (17) abführbar ist.

4. Regendach nach den Ansprüchen 1 bis 3, dadurch gekennzeichnet, daß am Umfang des Senkrechtförderers (3) bzw. dessen Rohr (2) mehrere Abspannseile (11) vergesehen sind, deren freie Enden etwa im Bereich der oberen Begrenzungskante (13) der Dachabschnitte (7-10) befestigt sind.

5. Regendach nach den Ansprüchen 1 bis 4, dadurch gekennzeichnet, daß bei Berührung eines der Dachabschnitte (7-10) mit dem Lukenrand (14) der jeweils betroffene Dachabschnitt (7,8,9,10) selbsttätig weggedrückt bzw. automatisch eingezogen wird, während der diesem gegenüberliegende Dachabschnitt (9,10,7,8) automatisch absenkbar ist.

6. Regendach nach den Ansprüchen 1 bis 5, dadurch gekennzeichnet, daß die Verbindungsstellen (18) der einzelnen Dachabschnitte (7-10) elastisch, insbesondere faltenbalgähnlich, ausgebildet sind.

7. Regendach nach den Ansprüchen 1 bis 6, dadurch gekennzeichnet, daß sämtliche Dachabschnitte (7-10) in vertikaler Richtung mittels einer um den Senkrechtförderer (3) bzw. dessen Rohr (2) herum angeordnete Führungseinrichtung (19) bewegbar sind.

8. Regendach nach den Ansprüchen 1 bis 7, dadurch gekennzeichnet, daß im oberen Bereich (13) der Dachabschnitte (7-10) Einrichtungen zum Schlagregenschutz (20) befestigbar sind.

**Claims**

1. Rain protection means for vertical conveyors, especially for covering ships hatches, consisting of inclined screen-like lateral roof sections (7-10) which are arranged centrally with respect to the vertical conveyor (3) and connected thereto, and which can be brought into a folded-up or closed position by means of at least one lifting device, characterised in that the roof sections (7-10) are arranged on the vertical conveyor (3) in such a way that their lower limit edges (12), both in the open and in the closed state, close with the pipe (2) of the vertical conveyor (3), while their upper limit edges (13) project outwards over the respective edge (14) of the hatch, and that water collecting at the lowest point of the rain protection means (1) can be led off downwards or outwards.

2. Rain protection means according to Claim 1, characterised in that the water collecting can be led off outwards by means of an optionally telescopic discharge pipe (16).

3. Rain protection means according to Claim 1, characterised in that the water collecting can be led off downwards into the bilges of the ship (5) through a discharge pipe (17) connected to the vertical conveyor (3).

4. Rain protection means according to Claims 1 to 3, characterised in that on the periphery of the vertical conveyor (3) or its pipe (2) a plurality of bracing ropes (11) are provided, the free ends of which are fastened approximately in the region of the upper limit edge (13) of the roof sections (7-10).

5. Rain protection means according to Claims 1 to 4, characterised in that when one of the roof sections (7-10) comes into contact with the edge (14) of the hatch, the relevant roof section (7,8,9,10) is in each case automatically pushed away or automatically pulled in, while the roof section (9,10,7,8) situated opposite thereto can be automatically lowered.

6. Rain protection means according to Claims 1 to 5, characterised in that the points of connection (18) of the individual roof sections (7-10) are made resilient, especially concertina-like.

7. Rain protection means according to Claims 1 to 6, characterised in that all roof sections (7-10) are movable in a vertical direction by means of a guide arrangement (19) arranged round the vertical conveyor (3) or its pipe (2).

8. Rain protection means according to Claims 1 to 7, characterised in that means for protection against driving rain (20) can be secured in the upper region (13) of the roof sections (7-10).

**Revendications**

1. Auvent de protection contre la pluie pour convoyeurs verticaux, notamment pour la couverture d'écoutilles de navires, constitué de parties d'auvent (7-10) latérales, configurées à la manière d'un parapluie, disposées de manière inclinée et centrée par rapport au convoyeur vertical (3) et assemblées à ce dernier, qui peuvent être amenées dans une position déployée ou dans une position fermée par au moins un dispositif de levage,
**caractérisé** en ce que les parties d'auvent (7-10) sont déplacées sur le convoyeur vertical (3) de telle sorte que leurs bords de délimitation inférieurs (12) se terminent, à l'état ouvert comme à l'état fermé, contre le tube (2) du convoyeur vertical (3), tandis que leurs bords de délimitation supérieurs (13) dépassent vers l'extérieur du bord d'écoutille respectif (14), et en ce que l'eau qui s'accumule au point le plus bas de l'auvent de protection (1) peut être évacuée vers le bas ou vers l'extérieur.

2. Auvent de protection contre la pluie selon la revendication 1, **caractérisé** en ce que l'eau qui s'accumule peut être évacuée vers l'extérieur au moyen d'un tube d'évacuation (16), éventuellement télescopique.

3. Auvent de protection contre la pluie selon la revendication 1, **caractérisé** en ce que l'eau qui s'accumule peut être évacuée vers le bas dans le fond de cale du navire (5) au moyen d'un tube d'évacuation (17) assemblé au convoyeur vertical (3).

4. Auvent de protection contre la pluie selon l'une des revendications 1 à 3, **caractérisé** en ce que plusieurs haubans (11) sont prévus sur la périphérie du convoyeur vertical (3) ou de son tube (2), haubans dont les extrémités libres sont fixées approximativement dans la région du bord de délimitation supérieur (13) des parties d'auvent (7-10).

5. Auvent de protection contre la pluie selon l'une des revendications 1 à 4, **caractérisé** en ce qu'en cas de contact d'une des parties d'auvent (7-10) avec le bord d'écoutille (14), la partie d'auvent chaque fois concernée (7, 8, 9, 10) est automatiquement repoussée ou rentrée, tandis que la partie d'auvent (9, 10, 7, 8) en vis-à-via peut être automatiquement abaissée.

6. Auvent de protection contre la pluie selon l'une des revendications 1 à 5, **caractérisé** en ce que les points d'assemblage (18) des différentes parties d'auvent (7-10) sont réalisés élastiques, notamment à la manière de souflets.

7. Auvent de protection contre la pluie selon l'une des revendications 1 à 6, **caractérisé** en ce que les différentes parties d'auvent (7-10) peuvent être déplacées en direction verticale au moyen d'un dispositif de guidage (19) entourant le convoyeur vertical (3) ou son tube (2).

8. Auvent de protection contre la pluie selon l'une des revendications 1 à 7, **caractérisé** en ce que des dispositifs de protection contre la pluie battante (20) peuvent être fixés dans la région supérieure (13) des parties d'auvent (7-10).

Fig. 2

Fig. 1